# EUROPÄISCHE PATENTSCHRIFT

(11) **EP 1 409 182 B1**
(45) Veröffentlichungstag und Bekanntmachung des Hinweises auf die Patenterteilung: **19.10.2005**
(21) Anmeldenummer: 02735175.8
(22) Anmeldetag: 26.03.2002
(51) Int. Cl.: B23B 3/30

(54) **WERKZEUGMASCHINE**
MACHINE TOOL
MACHINE-OUTIL

(30) Priorität: 05.04.2001 DE 10116994
(43) Veröffentlichungstag der Anmeldung: 21.04.2004
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Hoeger, Stellrecht & Partner Patentanwälte
(86) Internationale Anmeldenummer: PCT/EP2002/003355
(87) Internationale Veröffentlichungsnummer: WO 2002/081132

(56) Entgegenhaltungen:
- EP-A- 0 999 002
- EP-A- 1 160 052

## Beschreibung

Die Erfindung betrifft eine Werkzeugmaschine, insbesondere eine Drehmaschine, umfassend ein Maschinengestell, auf welchem sich ein erster und ein zweiter Spindelgehäuseträger in einer Z-Richtung relativ zueinander bewegbar abstützen, eine erste, ein erstes Werkstück aufnehmende Arbeitsspindel, welche in einem auf dem ersten Spindelgehäuseträger sitzenden Spindelgehäuse um eine Spindelachse drehbar gelagert ist, eine zweite, koaxial zur ersten Arbeitsspindel angeordnete und ein zweites Werkstück aufnehmende Arbeitsspindel, welche in einem auf dem zweiten Spindelgehäuseträger sitzenden Spindelgehäuse um eine Spindelachse drehbar gelagert ist, einen In X-Richtung bewegbaren ersten Werkzeugträger, der der ersten Arbeitsspindel zur Bearbeitung von in dieser angeordneten ersten Werkstücken zugeordnet ist, einen in X-Richtung bewegbaren zweiten Werkzeugträger, der der zweiten Arbeitsspindel zur Bearbeitung von in dieser angeordneten zweiten Werkstücken zugeordnet ist, wobei der erste und der zweite Werkzeugträger auf derselben Seite der Spindelachse angeordnet sind, und eine Maschinensteuerung für die Steuerung der Relativbewegungen zwischen dem ersten Werkstück und den Werkzeugen des ersten Werkzeugträgers sowie dem zweiten Werkstück und den Werkzeugen des zweiten Werkzeugträgers.

Derartige Werkzeugmaschinen sind aus dem Stand der Technik bekannt. Generell besteht bei derartigen Werkzeugmaschinen die Forderung, eine möglichst große Zahl von Werkzeugen gleichzeitig einsetzen zu können.

Der Erfindung liegt daher die Aufgabe zugrunde, eine Werkzeugmaschine der gattungsgemäßen Art derart zu verbessern, daß noch mehr Werkzeuge gleichzeitig an den Werkstücken einsetzbar sind.

Diese Aufgabe wird bei einer Werkzeugmaschine der eingangs beschriebenen Art erfindungsgemäß dadurch gelöst, daß sich die Spindelgehäuseträger seitlich von den Spindelgehäusen weg erstrecken und daß zwischen den Spindelgehäuseträgem der ersten und der zweiten Arbeitsspindel auf einer dem ersten und dem zweiten Werkzeugträger ungefähr gegenüberliegenden Seite der Spindelachsen ein Dritter, mindestens in X-Richtung bewegbarer Werkzeugträger vorgesehen ist, der einer der Arbeitsspindeln zugeordnet ist.

Der Vorteil der erfindungsgemäßen Lösung ist darin zu sehen, daß mit dieser sich in einfacher Weise die Zahl der einsetzbaren Werkzeuge vermehren läßt.

Um die Arbeitsspindel soweit aufeinanderzu bewegen zu können, daß eine Übergabe eines Werkstücks von einer Spindel zu anderen möglich ist, ist es notwendig, daß der Werkzeugträger in Z-Richtung keine große Ausdehnung aufweist, um die Auskragung der Arbeitsspindel gegenüber den Spindelgehäuseträgem möglichst gering zu halten und somit die Steifigkeit der Maschine zu verbessern.

Aus diesem Grund ist vorzugsweise vorgesehen, daß der dritte Werkzeugträger auf einem X-Schlitten angeordnet ist, welcher mit in einer senkrecht zu den Spindelachsen stehenden X-Führungsebene angeordneten X-Führungen an einer X-Schlittenbasis geführt ist.

Der Vorteil dieser Lösung ist darin zu sehen, daß damit in einfacher Weise erreicht werden kann, daß der dritte Werkzeugträger mit dem X-Schlitten in Z-Richtung schmal baut, obwohl eine ausreichend große Abstützfläche in der X-Führungsebene realisiert werden kann, um den X-Schlitten möglichst steif an der Schlittenbasis zu führen.

Eine noch vorteilhaftere Ausführungsform der erfindungsgemäßen Lösung, bei welcher noch mehr Werkzeuge in Eingriff bringbar sind, sieht vor, daß zwischen dem ersten und dem zweiten Spindelgehäuseträger ein vierter Werkzeugträger angeordnet ist und daß der dritte Werkzeugträger der ersten Arbeitsspindel und der vierte Werkzeugträger der zweiten Arbeitsspindel zugeordnet ist. Somit stehen insgesamt vier Werkzeugträger zur Verfügung, so daß jeweils zwei Werkzeuge am ersten Werkstück und zwei Werkzeuge am zweiten Werkstück in Eingriff gebracht werden können.

Besonders günstig ist es, wenn der vierte Werkzeugträger auf einem X-Schlitten angeordnet ist, welcher in in einer senkrecht zu den Spindelachsen stehenden X-Führungsebene angeordneten X-Führungen an einer X-Schlittenbasis geführt ist. Damit baut auch der vierte Werkzeugträger in Z-Richtung mit geringer Ausdehnung, so daß auch dadurch wiederum eine möglichst geringe Auskragung der Spindeln über die Spindelgehäuseträgerschlitten hinaus erforderlich ist.

Hinsichtlich der Anordnung der dritten und vierten Werkzeugträger wurden bislang keine näheren Angaben gemacht. So wäre es beispielsweise denkbar, den dritten und vierten Werkzeugträger auf einem gemeinsamen X-Schlitten anzuordnen.

Besonders günstig hinsichtlich der Fertigungsflexibilität ist es jedoch, wenn der dritte und der vierte Werkzeugträger jeweils auf einem eigenen X-Schlitten sitzen.

Ferner gibt es unterschiedliche Möglichkeiten, die jeweils den Werkzeugträgern zugeordneten X-Schlitten anzuordnen. Eine einfache Lösung sieht vor, daß der X-Schlitten des dritten Werkzeugträgers und der X-Schlitten des vierten Werkzeugträgers auf einer gemeinsamen X-Schlittenbasis sitzen. Diese Lösung hat den Vorteil, daß damit eine konstruktiv einfache Lösung für die Anordnung des dritten und vierten Werkzeugträgers zur Verfügung steht.

Dabei kann die X-Schlittenbasis entweder stationär an dem Maschinengestell angeordnet sein oder beispielsweise in Z-Richtung oder in Y-Richtung noch verschiebbar sein.

Eine andere günstige Lösung sieht vor, daß jeder der X-Schlitten eine eigene X-Schlittenbasis aufweist. Diese Lösung hat den Vorteil, daß damit die Flexibilität erhöht wird, insbesondere da beispielsweise jede Schlittenbasis in Z- oder Y-Richtung verschiebbar ausgebildet sein kann.

Hinsichtlich der Ausbildung der X-Führungen in der X-Führungsebene wurden im Zusammenhang mit der bisherigen Erläuterung der einzelnen Ausführungsbeispiele keine näheren Angaben gemacht. Um eine ausreichend steife Abstützung relativ zur X-Führungsebene zu erhalten, ist vorzugsweise vorgesehen, daß die X-Führungen in einer in der X-Führungsebene und quer zur X-Richtung verlaufenden Querrichtung einen Abstand voneinander aufweisen, der mindestens einem wirksamen Durchmesser der Werkstückaufnahme in den jeweiligen Arbeitsspindeln entspricht.

Alternativ oder ergänzend hierzu sieht eine vorteilhafte Dimensionierungsvorschrift für die Abstützung in der X-Führungsebene vor, daß die X-Führungen in einer der X-Führungsebene und quer zur X-Richtung verlaufenden Querrichtung einen Abstand voneinander aufweisen, der in der Größenordnung einer Ausdehnung des jeweiligen Werkzeugträgers in der Querrichtung liegt.

Vorzugsweise ist dabei der Werkzeugträger als Werkzeugrevolver ausgebildet, so daß der Abstand in der Querrichtung beispielsweise in diesem Fall der Ausdehnung des Revolvergehäuses in der Querrichtung näherungsweise entspricht.

Eine besonders günstige Bauform, welche möglichst schmal in Z-Richtung baut, sieht vor, daß der X-Schlitten einen Schlittenkörper aufweist, welcher nahe seiner in Querrichtung beabstandeten Randseiten durch die X-Führungen geführt ist.

Eine äußerst zweckmäßige Lösung sieht vor, daß der Schlittenkörper mit auf quer zur X-Führungsfläche verlaufenden Randflächen sitzenden X-Führungen geführt ist.

Hinsichtlich der Ausbildung der X-Schlittenbasis ist es - wie bereits erwähnt - denkbar, die Schlittenbasis stationär anzuordnen.

Eine besonders günstige Lösung sieht jedoch vor, daß die X-Schlittenbasis als mit Z-Führungen geführter Z-Schlitten ausgebildet ist.

Vorzugsweise ist dabei der Z-Schlitten mit einer Z-Führung an dem Spindelgehäuseträger geführt, dessen Arbeitsspindel dem auf dem Z-Schlitten angeordneten Werkzeugträger zugeordnet ist.

Eine derartige Z-Führung kann in unterschiedlichster Weise ausgebildet sein. Eine besonders günstige Lösung sieht vor, daß die Z-Führung einen Arm aufweist, welcher sich von dem Z-Schlitten in Richtung des diesen führenden Spindelgehäuseträgers erstreckt.

Um eine besonders vorteilhafte Führung zu erreichen, ist vorzugsweise vorgesehen, daß der Arm sich über den Spindelgehäuseträger hinaus erstreckt, so daß ein großer Weg durch die Z-Führung in Z-Richtung realisierbar ist.

Die Z-Führung umfaßt ferner noch eine Z-Führungsaufnahme, wobei sich der Arm durch die Z-Führungsaufnahme für diesen hindurcherstreckt, die an dem diesen führenden Spindelgehäuseträger angeordnet ist. Damit ist eine besonders einfach zu realisierende und stabile Lösung für die Führung des Z-Schlittens geschaffen.

Hinsichtlich eines Antriebs des Z-Schlittens wurden bislang keine näheren Angaben gemacht. Beispielsweise könnte der Antrieb relativ zum Maschinengestell wirksam sein. Eine besonders günstige Lösung sieht vor, daß ein Z-Achsantrieb vorgesehen ist, mit welchem der Z-Schlitten relativ zum jeweiligen Spindelgehäuseträger bewegbar ist.

Besonders zweckmäßig ist es dabei, wenn der Z-Achsantrieb zwischen dem Arm und dem diesen führenden Spindelgehäuseträger wirksam ist, so daß die Z-Position des Z-Schlittens stets relativ zum jeweiligen Spindelgehäuseträger definierbar ist.

Hinsichtlich des für den Z-Achsantrieb erforderlichen Antriebsmotors ist es besonders günstig, wenn dieser Antriebsmotor für den Z-Achsantrieb von dem Arm gehalten ist, so daß für die Anordnung des Antriebsmotors eine besonders einfache und raumsparende Konstruktion zur Verfügung steht.

Hinsichtlich der Anordnung des X-Achsantriebsmotors wurden im Zusammenhang mit der bisherigen Erläuterung der einzelnen Ausführungsbeispiele ebenfalls keine näheren Angaben gemacht. Beispielsweise könnte der X-Achsantriebsmotor unmittelbar am X-Schlitten oder der Schlittenbasis desselben angeordnet sein.

Eine besonders günstige Lösung sieht jedoch vor, daß ein X-Achsantriebsmotor für den X-Schlitten an einem dem Z-Schlitten gegenüberliegenden Ende des Arms angeordnet ist und somit in einer Position angeordnet ist, in welcher er im Bereich des ohnehin beengten Arbeitsraums keinen Bauraum beansprucht.

Um mit einem derartigen X-Achsantriebsmotor den X-Schlitten anzutreiben ist vorzugsweise vorgesehen, daß ein Antriebsstrang zwischen dem X-Achsantriebsmotor und dem Z-Schlitten sich entlang des Arms erstreckt und somit in günstiger Weise zum Z-Schlitten und X-Schlitten geführt werden kann.

Eine besonders zweckmäßige Lösung sieht vor, daß der Antriebsstrang durch den Arm hindurch geführt ist und somit gleichzeitig auch durch den Arm geschützt ist.

Alternativ oder ergänzend zur Führung des Z-Schlittens an dem entsprechenden Spindelgehäuseträger sieht eine bevorzugte Lösung vor, daß sich der Z-Schlitten mit mindestens einem Führungselement an einer am Maschinengestell vorgesehenen Z-Führung abstützt. Diese Lösung hat den Vorteil, daß hiermit eine unmittelbar und stabile Abstützung am Maschinengestell, insbesondere nahe dem Werkzeugträger, realisierbar ist.

Noch besser ist es, wenn der Z-Schlitten mit einem Führungselement jeweils an einem von zwei am Maschinengestell angeordneten Z-Führungen geführt ist.

Vorzugsweise ist dabei zur Abstützung des Z-Schlittens vorgesehen, daß mindestens eines der Führungselemente an der entsprechenden Z-Führung mit einer Führungslänge in Z-Richtung geführt ist, die geringer ist als eine Kippmomente des Z-Schlittens aufnehmende Führungslänge, so daß dadurch eine möglichst geringe Ausdehnung des Z-Schlittens in Z-Richtung realisierbar ist.

Besonders günstig ist es dabei, wenn mindestens eines der Führungselemente an der entsprechenden Z-Führung so geführt ist, daß diese lediglich in quer zur Z-Richtung verlaufenden Ebenen liegende Kräfte aufnehmen.

Hinsichtlich der Z-Führungen ist es denkbar, spezielle Z-Führungen für den Z-Schlitten vorzusehen.

Eine besonders günstige Lösung sieht jedoch vor, daß die am Maschinengestell angeordneten Z-Führungen auch als Z-Führungen eines weiteren am Maschinengestell geführten Schlittens ausgebildet sind, so daß die Z-Führungen mehrfach genutzt werden können, woraus ein einfacherer und übersichtlicherer Aufbau der erfindungsgemäßen Werkzeugmaschine resultiert.

Hinsichtlich der Bewegbarkeit der Arbeitsspindeln relativ zueinander wurden bislang keine detaillierten Angaben gemacht. So sieht eine besonders vorteilhafte Ausführungsform der erfindungsgemäßen Werkzeugmaschine vor, daß mindestens einer der Spindelgehäuseträger einen in Z-Richtung verfahrbaren Spindelgehäuseträgerschlitten für die von diesem getragene Arbeitsspindel bildet, so daß durch diesen Spindelgehäuseträgerschlitten die Arbeitsspindel in Z-Richtung vorteilhafterweise verfahrbar ist.

Besonders günstig ist es, wenn beide Spindelgehäuseträger als in Z-Richtung verfahrbare Spindelgehäuseträgerschlitten ausgebildet sind.

Hinsichtlich der Führung der Spindelgehäuseträgerschlitten in Z-Richtung wurden bislang keine näheren Angaben gemacht.

So sieht eine besonders vorteilhafte Lösung vor, daß eine Z-Führungsebene, in welcher die Z-Führungen für den Spindelgehäuseträgerschlitten liegen, quer zu einer Aufstellfläche des Maschinengestells verläuft. Eine derartige Anordnung hat den Vorteil, daß damit die Spindelgehäuseträgerschlitten gut zugänglich und raumsparend angeordnet werden können.

Vorzugsweise ist bei einer derartigen Lösung vorgesehen, daß der Z-Schlitten mindestens an einer der beiden im Abstand voneinander angeordneten Z-Führungen für den jeweiligen Spindelgehäuseträgerschlitten geführt ist. Diese Lösung hat nicht nur den Vorteil, daß sie wesentlich einfacher ist, sondern auch noch den Vorteil, daß sich in der Relativpositionierung des Z-Schlittens gegenüber der jeweiligen Arbeitsspindel Ungenauigkeiten in den Z-Führungen weniger auswirken, da die Z-Führungen sowohl die Anordnung der Arbeitsspindel als auch die des Z-Schlittens festlegen.

Eine besonders günstige Abstützung ist dann erreicht, wenn der Z-Schlitten an beiden im Abstand voneinander angeordneten Z-Führungen für den jeweiligen Spindelgehäuseträgerschlitten geführt ist, da damit eine optimale Abstützung des Z-Schlittens möglichst nahe des Werkzeugträgers erreichbar ist.

Bezüglich der Funktion der erfindungsgemäßen Werkzeugmaschine wurden bislang keine näheren Angaben gemacht.

So sieht eine besonders bevorzugte Lösung vor, daß in einem Bearbeitungsmodus der dritte Werkzeugträger relativ zur ersten Arbeitsspindel und der vierte Werkzeugträger relativ zur zweiten Arbeitsspindel in die für die Bearbeitung des ersten bzw. zweiten Werkstücks erforderlichen Z-Positionen verfahrbar sind.

Hinsichtlich des ersten Werkzeugträgers wurden in diesem Zusammenhang keine näheren Angaben gemacht. Besonders günstig ist es dabei, wenn mit der Maschinensteuerung in dem Betriebsmodus der erste Werkzeugträger und die erste Arbeitsspindel in die für die Bearbeitung des ersten Werkstücks erforderlichen Z-Positionen relativ zueinander verfahrbar sind.

Für die Bearbeitung des ersten Werkstücks sind somit die unterschiedlichsten Lösungen denkbar.

Beispielsweise ist es denkbar, die erste Arbeitsspindel stationär anzuordnen und somit den ersten Werkzeugträger und den dritten Werkzeugträger relativ zur stationären ersten Arbeitsspindel zu bewegen.

Eine andere vorteilhafte Lösung sieht vor, den ersten Werkzeugträger stationär anzuordnen und dann die erste Arbeitsspindel relativ zum ersten Werkzeugträger zu bewegen und zusätzlich den dritten Werkzeugträger relativ zur ersten Arbeitsspindel, wobei bei Bewegungen der ersten Arbeitsspindel relativ zum ersten Werkzeugträger der dritte Werkzeugträger aufgrund der direkten Kopplung mit dem ersten Spindelgehäuseträgerschlitten sozusagen "Huckepack" zur ersten Arbeitsspindel mit dieser zusammen bewegt wird und somit die Steuerung des dritten Werkzeugträgers mit der Position der Arbeitsspindel in Z-Richtung als Bezugsgröße arbeitet und diese nicht ausdrücklich berücksichtigen muß.

Um die Vielzahl funktioneller Möglichkeiten noch zu steigern, ist es etwa aber auch denkbar, sowohl den ersten Werkzeugträger als auch die erste Arbeitsspindel und den dritten Werkzeugträger relativ zur ersten Arbeitsspindel jeweils in Z-Richtung bewegbar auszubilden, wobei nach wie vor der dritte Werkzeugträger stets "Huckepack" zur ersten Arbeitsspindel bewegt wird.

Ferner ist es günstig, wenn mit der Maschinensteuerung in dem Bearbeitungsmodus der zweite Werkzeugträger und die zweite Arbeitsspindel in die für die Bearbeitung am zweiten Werkstück erforderlichen Z-Positionen relativ zueinander verfahrbar sind.

Auch bei der Bearbeitung des zweiten Werkstücks sind die unterschiedlichsten Lösungen denkbar, so wäre es denkbar, den zweiten Werkzeugträger stationär anzuordnen und die zweite Arbeitsspindel relativ zum zweiten Werkzeugträger zu bewegen und zusätzlich den vierten Werkzeugträger relativ zur zweiten Arbeitsspindel, wobei dieser ebenfalls "Huckepack" mit der zweiten Arbeitsspindel bewegbar ist.

Da eine der Arbeitsspindeln zur Übergabe des Werkstücks zwischen diesen in Z-Richtung bewegbar sein muß, wäre eine weitere Möglichkeit die, den vierten Werkzeugträger stationär anzuordnen und diesen nicht in Z-Richtung bewegbar zu gestalten, so daß in diesem Fall die zweite Arbeitsspindel relativ zum vierten Werkzeugträger in Z-Richtung bewegbar sein muß und zusätzlich der erste Werkzeugträger relativ zur zweiten Arbeitsspindel.

Die erfindungsgemäße Werkzeugmaschine kann dabei auch sämtliche vorstehend dargelegten Alternativen im Zusammenhang mit der Bearbeitung des ersten und zweiten Werkstücks miteinander kombinieren und es ist auch möglich, die erste Arbeitsspindel in Z-Richtung bewegbar zu halten, während die zweite Arbeitsspindel in Z-Richtung stationär ist.

Eine alternative, jedoch ebenfalls vorteilhafte Lösung sieht vor, daß der dritte Werkzeugträger mindestens an einem der Werkstücke einsetzbare Werkzeuge trägt, daß mit der Maschinensteuerung in einem Bearbeitungsmodus eine der Arbeitsspindeln relativ zum dritten Werkzeugträger entsprechend der für die Bearbeitung des jeweiligen Werkstücks mittels des am dritten Werkzeugträger für dieses Werkstück vorgesehenen Werkzeugs erforderlichen Z-Positionen bewegbar ist und außerdem der dieser Arbeitsspindel ebenfalls zugeordnete

Werkzeugträger relativ zu dieser Arbeitsspindel entsprechend der für die Bearbeitung dieses Werkstücks mittels eines an diesem der Arbeitsspindel ebenfalls zugeordneten Werkzeugträger vorgesehenen Werkzeugs erforderlichen Z-Positionen bewegbar ist.

Der Vorteil dieser Lösung ist der, daß der dritte Werkzeugträger stationär sein kann und sich sowohl die entsprechende Arbeitsspindel als auch der entsprechende weitere Werkzeugträger bewegen.

Diese Lösung hat insbesondere den Vorteil, daß für die Bearbeitung eines Werkstücks mit zwei Werkzeugträgern nur zwei Z-Achsen erforderlich sind.

Besonders günstig ist es, wenn mit der Maschinensteuerung in dem Bearbeitungsmodus die erste Arbeitsspindel relativ zum dritten Werkzeugträger und die zweite Arbeitsspindel relativ zum vierten Werkzeugträger in die für die Bearbeitung des ersten bzw. zweiten Werkstücks erforderlichen Z-Positionen bewegbar sind.

Ferner ist vorteilhafterweise vorgesehen, daß der erste Werkzeugträger relativ zur ersten Arbeitsspindel und der zweite Werkzeugträger relativ zur zweiten Arbeitsspindel in die für die Bearbeitung erforderlichen Z-Positionen bewegbar sind.

Im Zusammenhang mit der bisherigen Erläuterung der Werkzeugträger wurden zu diesen keine näheren Angaben gemacht.

Beispielsweise könnten derartige Werkzeugträger Einzelwerkzeugträger sein.

Besonders vorteilhaft ist es jedoch, wenn diese Werkzeugträger als Mehrfachwerkzeugträger ausgebildet sind, wobei ein derartiger Mehrfachwerkzeugträger ein linear verschiebbarer Werkzeugträger sein kann oder ein Revolver mit einem Revolverkopf, welcher gegenüber einem Gehäuse um eine Achse drehbar ist.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: einen Schnitt längs Linie 1-1 in Fig. 3 durch ein erstes Ausführungsbeispiel einer erfindungsgemäßen Werkzeugmaschine;
- Fig. 2: eine Draufsicht in Richtung des Pfeils X in Fig. 3 mit teilweise weggebrochenem Maschinenbett;
- Fig. 3: einen Schnitt längs Linie 3-3 in Fig. 1;
- Fig. 4: einen Schnitt längs Linie 4-4 in Fig. 1;
- Fig. 5: einen Schnitt ähnlich Fig. 1 durch ein zweites Ausführungsbeispiel und
- Fig. 6: eine Draufsicht ähnlich Fig. 2 beim zweiten Ausführungsbeispiel.

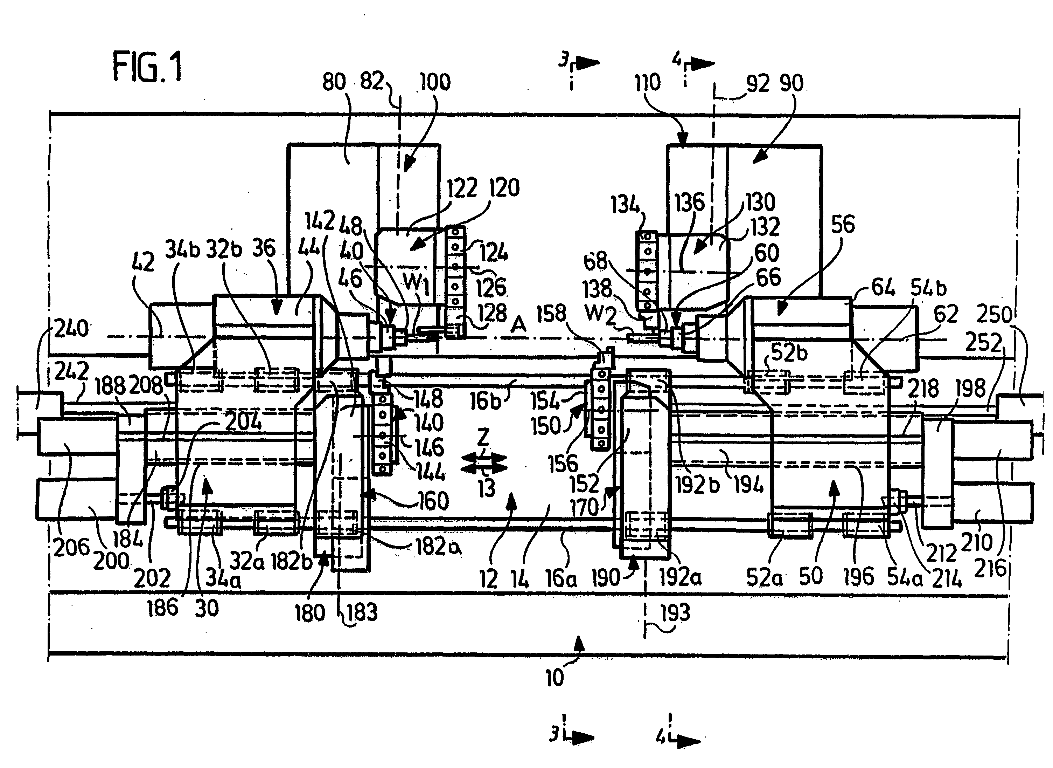

Ein Ausführungsbeispiel einer erfindungsgemäßen Drehmaschine, dargestellt in den Fig. 1 bis 4, umfaßt ein als Ganzes mit 10 bezeichnetes Maschinengestell mit einem Maschinenbett 12, welches beispielsweise als in einer Längsrichtung 13 langgestreckter Hohlkörper ausgebildet ist, wie in Fig. 1, 3 und 4 dargestellt.

An dem Maschinenbett 12 sind auf einer Vorderseite 14 zwei parallel zur Längsrichtung 13 des Maschinenbetts verlaufende Z-Führungen 16a und 16b vorgesehen, die in einer ersten Z-Führungsebene 20 liegen, die quer zu einer Aufstellfläche 22 verläuft, auf welcher das Maschinengestell 10 steht. Dabei verläuft ferner die Z-Führungsebene 20 parallel zur Längsrichtung 13 des Maschinenbetts 12.

An den Z-Führungen 16a und 16b ist ein erster Spindelgehäuseträgerschlitten 30 jeweils mit zwei im Abstand voneinander angeordneten Führungswagenpaaren 32a und 34a bzw. 32b und 34b geführt, so daß der Spindelgehäuseträgerschlitten 30 in einer Z-Richtung längs der Z-Führungen 16 verfahrbar und an diesen gegen ein Kippen abgestützt ist.

Der erste Spindelgehäuseträgerschlitten 30 trägt ein Spindelgehäuse 36, in welchem eine erste Arbeitsspindel 40 um eine erste Spindelachse 42 drehbar gelagert und durch einen Spindelantrieb, vorzugsweise einen in das Spindelgehäuse 36 integrierten Spindelmotor 44 antreibbar ist.

Dem ersten Spindelgehäuseträgerschlitten 30 gegenüberliegend ist ein zweiter Spindelgehäuseträgerschlitten 50 angeordnet, welcher seinerseits mit zwei im Abstand voneinander angeordneten Sätzen von Führungswagen 52a und 54a bzw. 52b und 54b ebenfalls an den Z-Führungen 16a bzw. 16b in Z-Richtung beweglich geführt und gegen ein Kippen abgestützt ist.

Auch der zweite Spindelgehäuseträgerschlitten 50 trägt ein zweites Spindelgehäuse 56, in welchem eine zweite Arbeitsspindel 60 um eine zweite Spindelachse 62 drehbar gelagert und vorzugsweise durch einen Spindelmotor 64 antreibbar ist.

Dabei ist die zweite Spindelachse 62 koaxial zur ersten Spindelachse 42 ausgerichtet.

Vorzugsweise sind dabei die Arbeitsspindeln 40 und 60 so angeordnet, daß deren Spindelköpfe 46 und 66 einander zugewandt sind und Werkstückaufnahmen 48 bzw. 68 aufweisen, in welchen ein erstes Werkstück W1 bzw. ein zweites Werkstück W2 zur Drehbearbeitung aufnehmbar und fixierbar sind.

Ferner sind die beiden Arbeitsspindeln 40 und 60 bei koaxialer Ausrichtung der Spindelachsen 42 und 62 aufgrund der Verfahrbarkeit der Spindelgehäuseträgerschlitten 30 und 50 soweit aufeinanderzu verfahrbar, daß eine Übergabe des in der ersten Werkstückaufnahme 48 gehaltenen Werkstücks W1 in die zweite Werkstückaufnahme 68 der zweiten Arbeitsspindel 60 mit einem Wechsel der gespannten Seite möglich ist, so daß ein Werkstück W insgesamt als Werkstück W1 auf einer ersten Seite und als Werkstück W2 auf einer zweiten Seite und somit komplett bearbeitbar ist.

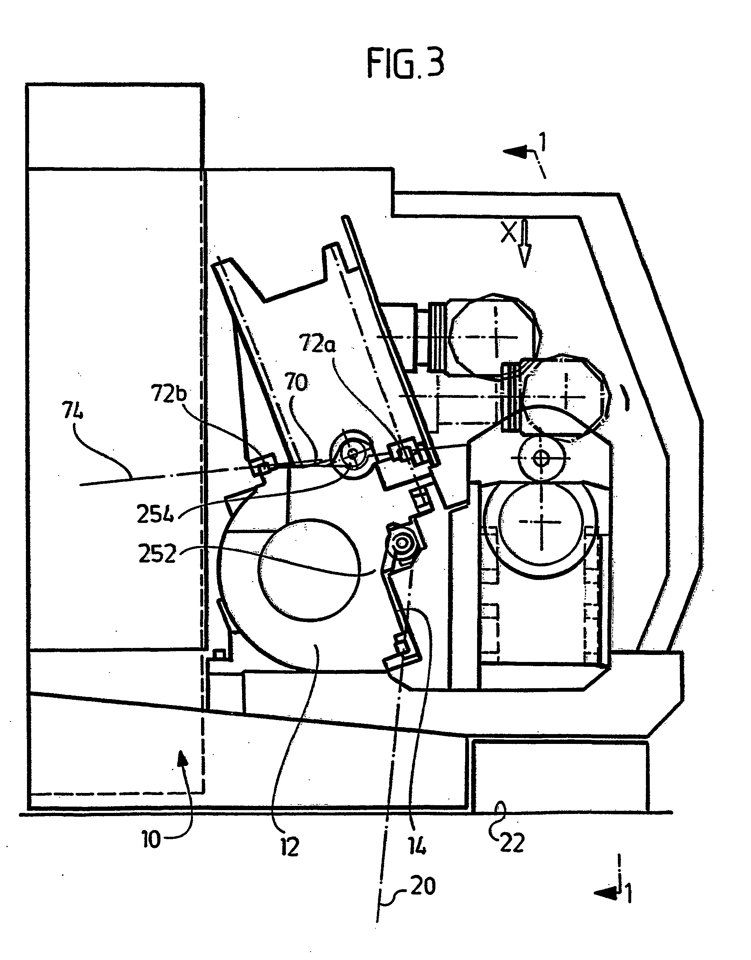

Wie in Fig. 3 dargestellt, sind auf einer Oberseite 70 des Maschinenbetts 12 zwei ebenfalls parallel zur Z-Richtung verlaufende Z-Führungen 72a und 72b vorgesehen, welche in einer zweiten Z-Führungsebene 74 liegen, die ihrerseits quer zur ersten Z-Führungsebene 20 und ungefähr parallel zur Aufstellfläche 22 verläuft.

An den Z-Führungen 72a und 72b auf der Oberseite 70 des Maschinenbetts 12 sind, wie in Fig. 1 dargestellt, ein erster Werkzeugschlittenträger 80 und ein zweiter Werkzeugschlittenträger 90 geführt, die ihrerseits wiederum einen Schlittenträger für einen ersten Werkzeugschlitten 100 bzw. einen zweiten Werkzeugschlitten 110 bilden, wobei der an dem jeweiligen Werkzeugschlittenträger 80 bzw. 90 geführte Werkzeugschlitten 100 bzw. 110 durch in einer X-Führungsebene 82 bzw. 92 liegende X-Führungen, beispielsweise dargestellt anhand der X-Führungen 94a und 94b, geführt ist, wobei die X-Führungsebenen 82 bzw. 92 ungefähr senkrecht zu den Spindelachsen 42 bzw. 72 verlaufen.

Auf den Werkzeugschlitten 100 und 110 sind beispielsweise als Werkzeugrevolver ausgebildete Werkzeugträger 120 bzw. 130 angeordnet, deren Revolvergehäuse 122 bzw. 132 auf den jeweiligen Werkzeugschlitten 100 bzw. 110 sitzt und an deren Revolvergehäuse 122 bzw. 132 ein Revolverkopf 124 bzw. 134 sitzt, der um eine Drehachse 126 bzw. 136 gegenüber dem Revolvergehäuse 122 bzw. 132 drehbar ist, wobei die Drehachsen 126 bzw. 136 ungefähr parallel zu den Spindelachsen 42 bzw. 62 verlaufen.

An den Revolverköpfen 124 bzw. 134 sind umfangsseitig Aufnahmen für Werkzeuge 128 bzw. 138 vorgesehen, mit denen die Werkstücke W1 zw. W2 bearbeitbar sind.

Erfindungsgemäß ist dabei der erste Werkzeugträger 120 der ersten Arbeitsspindel 40 und der zweite Werkzeugträger 130 der zweiten Arbeitsspindel 60 zugeordnet, das heißt, daß sämtliche Werkzeuge 128 des ersten Werkzeugträgers 120 für die Bearbeitung des ersten Werkstücks W1 in der ersten Arbeitsspindel 40 vorgesehen sind, während sämtliche Werkzeuge 138 des zweiten Werkzeugträgers 130 an dem in der zweiten Arbeitsspindel 60 gehaltenen Werkstück W2 vorgesehen sind.

Erfindungsgemäß ist nun bei dem ersten Ausführungsbeispiel zusätzlich zum ersten Werkzeugträger ein dritter Werkzeugträger 140 vorgesehen, welcher der ersten Arbeitsspindel 40 zugeordnet ist und ein vierter Werkzeugträger 150, welcher der zweiten Arbeitsspindel 60 zugeordnet ist.

Sowohl der dritte Werkzeugträger 140 als auch der vierte Werkzeugträger 150 sind als Werkzeugrevolver ausgebildet und umfassen ein Revolvergehäuse 142 bzw. 152, an welchem ein Revolverkopf 144 bzw. 154 um eine Revolverachse 146 bzw. 156 drehbar gelagert ist.

Auf dem Revolverkopf 144 zw. 154 sind Werkzeuge 148 bzw. 158 angeordnet, wobei die Werkzeuge 148 des Revolverkopfes 144 zur Bearbeitung des Werkstücks W1 und die Werkzeuge 158 des Revolverkopfes 154 zur Bearbeitung des Werkstücks W2 vorgesehen sind. Damit ist der gesamte dritte Werkzeugträger 140 der ersten Arbeitsspindel 40 und der gesamte vierte Werkzeugträger 150 der zweiten Arbeitsspindel 60 zugeordnet.

Der dritte Werkzeugträger 140 und der vierte Werkzeugträger 150 sitzen dabei auf einem diesen zugeordneten X-Schlitten 160 bzw. 170 und diese X-Schlitten 160 bzw. 170 sind ihrerseits wieder an einem als Basiskörper für diese dienenden Z-Schlitten 180 bzw. 190 geführt, wobei die Z-Schlitten 180 und 190 jeweils nur zwei Führungswagen 182a und 182b bzw. 192a und 192b aufweisen und mit diesen an den Z-Führungen 16a und 16b für die Spindelgehäuseträgerschlitten 30 und 50 geführt sind.

Da die Abstützung der Z-Schlitten 180 bzw. 190 durch nur zwei Führungswagen 182a und 182b bzw. 192a und 192b an den Z-Führungen 16a und 16b keine ausreichende Kippsteifigkeit bietet, sondern lediglich Stützkräfte aufnehmen kann, die in quer zu den Z-Führungen 16a, b verlaufenden Ebenen 183 bzw. 193 liegen , ist jeder der Z-Schlitten 180 und 190 mit einem Arm 184 bzw. 194 versehen, welcher sich ausgehend von dem jeweiligen Z-Schlitten 180 bzw. 190 in Richtung des Spindelgehäuseträgerschlittens 30 bzw. 50 erstreckt, der die dem dritten Werkzeugträger 140 bzw. vierten Werkzeugträger 150 zugeordnete Arbeitsspindel 40 bzw. 60 trägt.

Der jeweilige Arm 184 bzw. 194 ist dabei vorzugsweise als Pinole ausgebildet, welcher eine Längsführung 186 bzw. 196, beispielsweise eine Pinolenführung, in dem jeweiligen Spindelgehäuseträgerschlitten 30 bzw. 50 durchsetzt und in dieser in Z-Richtung linear beweglich relativ zum Spindelgehäuseträgerschlitten 30 bzw. 50 geführt ist, so daß durch die Führung des Arms 184 bzw. 194, oder besser gesagt der Pinole 184 bzw. 194 in der entsprechenden Pinolenführung 186 bzw. 196, im entsprechenden Spindelgehäuseträgerschlitten 30 bzw. 50 eine zusätzliche Abstützung des jeweiligen Z-Schlittens 180 bzw. 190 und damit insgesamt zusammen mit den Führungswagen 182a, b bzw. 192a, b eine stabile dreibeinähnliche Abstützung gegen ein Kippen der Schlitten 180 und 190 in Richtung des zugeordneten Spindelgehäuseträgerschlittens 30 bzw. 50 oder von diesem weg erfolgt und durch diese insgesamt dreifache Führung des Z-Schlittens 180 bzw. 190 eine Abstützung dieses Z-Schlittens auf nur einem Führungswagen 182a, b bzw. 192a, b ausreichend ist, so daß der Z-Schlitten 170 bzw. 180 in Z-Richtung lediglich eine Ausdehnung aufweisen muß, die zur Aufnahme eines nicht kippabstützenden Führungswagens 182a, b bzw. 192a, b ausreicht.

Vorzugsweise beträgt die Ausdehnung der Z-Schlitten in Z-Richtung maximal die Hälfte der Ausdehnung des jeweiligen Spindeigehäuseträgerschlittens 30 bzw. 50 im Bereich der Führungswagen 32 und 34 bzw. 52 und 54 in Z-Richtung.

Dies erlaubt es, die Spindelgehäuse 36 bzw. 56 mit den Arbeitsspindeln 40 bzw. 60 so auf den Spindelgehäuseträgerschlitten 30 bzw. 50 anzuordnen, daß die Arbeitsspindeln bis zur jeweiligen Werkstückaufnahme 48 bzw. 68 eine möglichst geringe Auskragung gegenüber dem Spindelgehäuseträgerschlitten 30 bzw. 50 aufweisen.

Ferner ist an dem jeweiligen Arm 184 bzw. 194 und zwar an einem dem jeweiligen Z-Schlitten 180 bzw. 190. gegenüberliegenden Ende ein Antriebsträger 188 bzw. 198 gehalten, an welchem ein Z-Achsantrieb 200 bzw. 210 montierbar ist, der eine mit ihrer Achse parallel zur Z-Richtung verlaufende Stellspindel 202 bzw. 212 antreibt, deren Spindelmutter 204 bzw. 214 fest an dem zugeordneten Spindelgehäuseträgerschlitten 30 bzw. 50 gehalten ist.

Mit einem derartigen Gewindespindelantrieb 202, 204 bzw. 212, 214 ist der Arm 184 bzw. 194 relativ zum Spindelgehäuseträgerschlitten 30 bzw. 50 völlig unabhängig von der Z-Posltion desselben relativ zum Maschinengestell 10 gesteuert positionierbar, wobei der erforderliche Z-Achsantrieb 200 bzw. 210 keinerlei Platz zwischen den Spindelgehäuseträgerschlitten 30, 50 benötigt, sondern auf einer einem Arbeitsraum A abgewandten Außenseite der Arme 184 bzw. 194 angeordnet sein kann.

Darüber hinaus ist an dem Antriebsträger 188 bzw. 198 ein X-Achsantrieb 206 bzw. 216 vorgesehen, welcher über eine durch den jeweiligen Arm 184 bzw. 194 verlaufende Antriebswelle 208 bzw. 218 In der Lage ist, ein zeichnerisch nicht dargestelltes Verstellgetriebe für den X-Schlitten 160 bzw. 170 anzutreiben, mit welchem dieser gegenüber dem jeweiligen Z-Schlitten 180 bzw. 190 bewegbar ist.

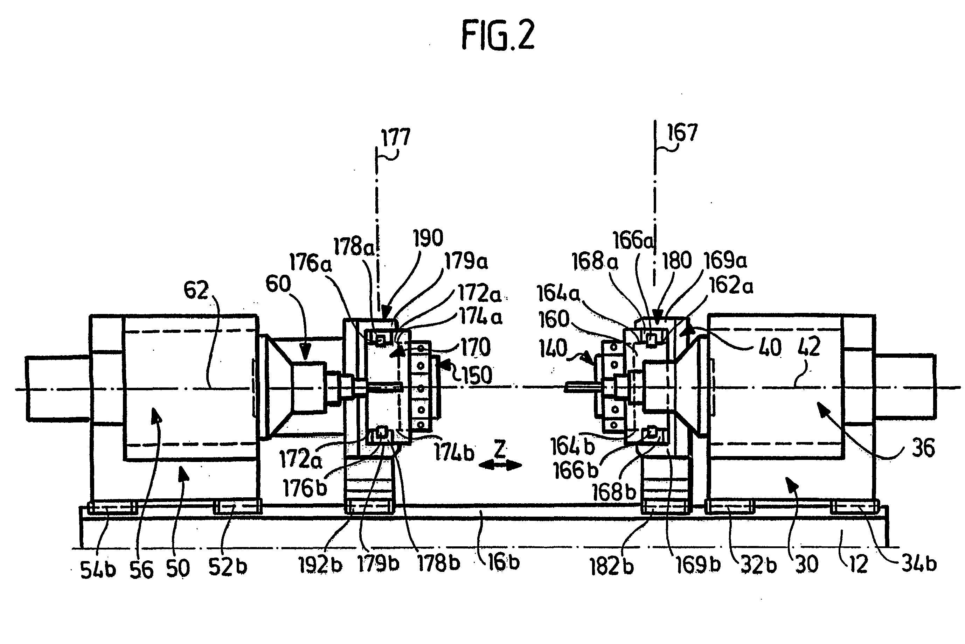

Zur Führung der X-Schlitten 160 bzw. 170 relativ zu den Z-Schlitten 180 bzw. 190 sind die X-Schlitten 160 bzw. 170, wie in Fig. 2 dargestellt, an Randflächen 162a, b bzw. 172a, b ihrer Randseiten 164a, b bzw. 174a, b mit auf auf diesen sitzenden X-Führungen 166a, b bzw. 176a, b versehen, die mit Führungswagen 168a, b bzw. 178a, b zusammenwirken, wobei die Führungswagen 168a, b bzw. 178a, b an dem jeweiligen Z-Schlitten 180 bzw. 190 stationär angeordnet sind.

Vorzugsweise sind dabei die Führungswagen 168a, b bzw. 178a, b an die X-Schlitten 160 bzw. 170 im Bereich ihrer Ränder 164a, b bzw. 174a, b übergreifenden Führungswangen 169a, b bzw. 179a, b gehalten, so daß die Z-Schlitten 180 bzw. 190 in Z-Richtung möglichst schmal bauen.

Somit legen die X-Führungen 166a, b und 176a, b jeweils X-Führungsebenen 167 bzw. 177 fest, welche senkrecht zur Z-Richtung verlaufen und es somit ermöglichen, den jeweiligen X-Schlitten 160 bzw. 170 kippsicher am Z-Schlitten 180 bzw. 190 in X-Richtung zu führen, wobei der Abstand zwischen den X-Führungen 166a und 166 b bzw. 176a und 176b sich nicht negativ auf die Ausdehnung der jeweiligen Z-Schlitten 180 bzw. 190 in Z-Richtung auswirkt, da die X-Führungsebenen 167 bzw. 177 senkrecht zur Z-Richtung verlaufen.

Damit trägt auch die Ausrichtung der X-Führungsebene 167 bzw. 177 relativ zum jeweiligen Z-Schlitten 180 bzw. 190 dazu bei, insgesamt ein Schlittensystem für den jeweiligen Werkzeugträger 140 bzw. 150 zu erhalten, welches insgesamt in Z-Richtung eine Ausdehnung hat, die maximal der Hälfte der Ausdehnung der Spindelgehäuseträgerschlitten 30 bzw. 50 in Z-Richtung entspricht.

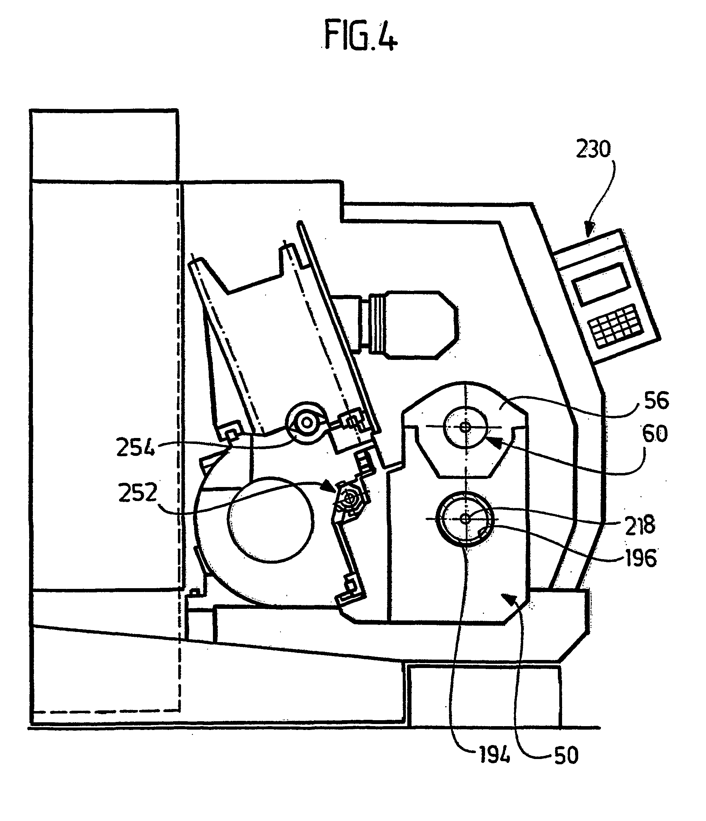

Die erfindungsgemäße Drehmaschine umfaßt ferner, wie in Fig. 3 und 4 dargestellt, eine Maschinensteuerung 230, mit welcher ein Antriebsmotor 240 eines ersten Linearantriebs 242 für den ersten Spindelgehäuseträgerschlitten 30 ansteuerbar ist sowie ein Antriebsmotor 250 eines zweiten Linearantriebs 252 für den zweiten Spindelgehäuseträgerschlitten 50, so daß beide Spindelgehäuseträgerschlitten 30 und 50 in Z-Richtung gesteuert verschiebbar sind.

Darüber hinaus sind mit der Maschinensteuerung230 die Z-Achsantriebe 200 und 210 ansteuerbar, mittels welchen aufgrund der Gewindespindelantriebe 202, 204 bzw. 212, 214 die Z-Schlitten 180 bzw. 190 relativ zum jeweiligen Spindelgehäuseträgerschlitten 30, 50 positionierbar sind, und zwar relativ zur jeweiligen Arbeitsspindel 40 bzw. 60, wobei die Positionierung der Werkzeuge 148 bzw. 158 relativ zum jeweiligen ersten Werkstück W1 bzw. zweiten Werkstück W2 unabhängig von der Z-Position der Arbeitsspindeln 40 bzw. 60 ist, so daß die Maschinensteuerung 230 für die Bearbeitung der Werkstücke W1 bzw. W2 durch die Werkzeuge 148 bzw. 158 lediglich den Z-Achsantrieb 200 bzw. 210 ansteuern muß.

Die Verschiebbarkeit der Arbeitsspindeln 40 bzw. 60 relativ zueinander kann nun nicht nur zur Übergabe des Werkstücks W von der ersten Arbeitsspindel 40 an die zweite Arbeitsspindel 60 oder umgekehrt ausgenutzt werden, sondern auch dazu ausgenutzt werden, daß beispielsweise zur Bearbeitung des ersten Werkstücks mit einem Werkzeug 128 des ersten Werkzeugträgers 120 die Z-Achsbewegung durch Bewegung des Spindelgehäuseträgerschlittens 30 relativ zum Maschinenbett 12 erfolgt, so daß ein Verfahren des ersten Werkzeugträgers 120 in Z-Richtung mittels des ersten Werkzeugschlittenträgers 80 nicht erforderlich ist.

In gleicher Weise kann auch die Z-Bewegung zur Bearbeitung des zweiten Werkstücks W2 mittels eines Werkzeugs 138 des zweiten Werkzeugträgers 130 ebenfalls durch Verfahren der Arbeitsspindel 60 mitsamt dem Spindelgehäuseträgerschlitten 50 in Z-Richtung erfolgen, so daß ebenfalls der Werkzeugschlittenträger 90 selbst nicht verfahren werden muß.

Schließlich erlaubt die Maschinensteuerung 230 aber auch ein Verschieben der Werkzeugschlittenträger 80 bzw. 90 in Z-Richtung mittels Gewindespindelantrieben, wobei der Gewindespindelantrieb 254 für den zweiten Werkzeugschlittenträger 90 in Fig. 3 und 4 dargestellt ist.

Ferner ermöglicht die Maschinensteuerung 230 die Steuerung der Arbeitsspindeln 40, 60 der Bewegungen der X-Schlitten 100 und 110 sowie 160 und 170 in X-Richtung, das heißt quer zu den Spindelachsen 42 und 62, und schließlich auch noch eine Steuerung der Revolverköpfe 124, 134, 144 und 154 durch Drehen derselben um ihre jeweilige Achse 126, 136, 146 und 156.

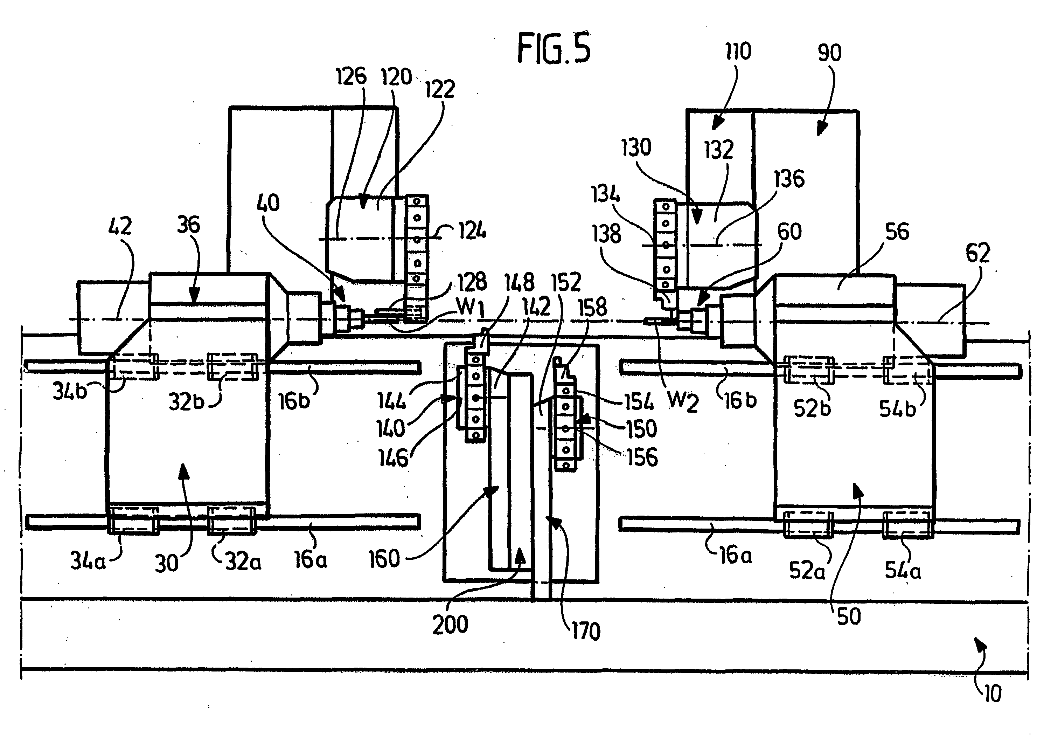

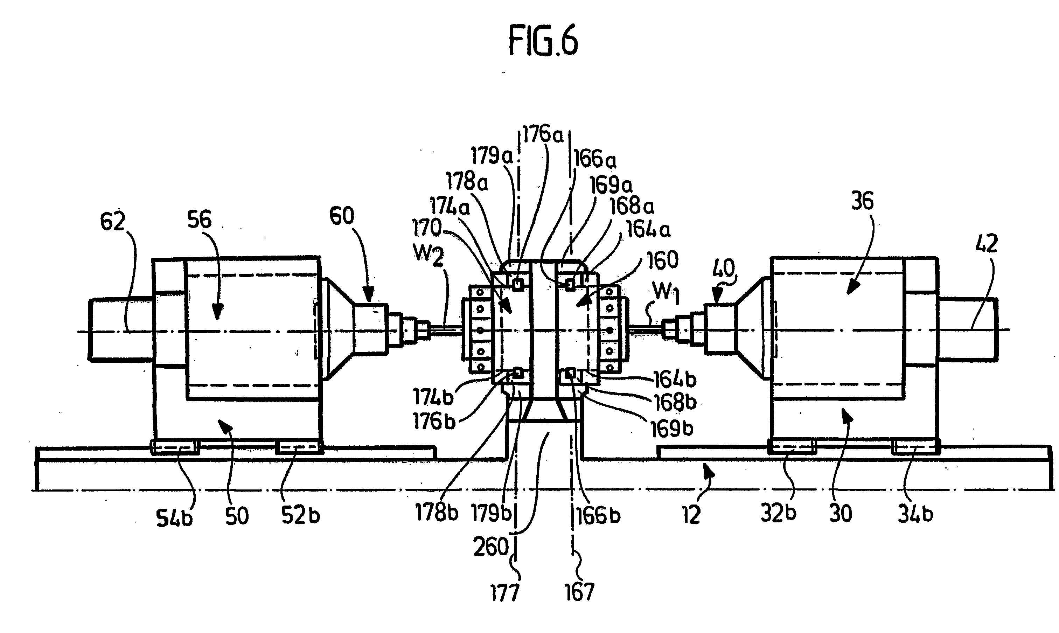

Ein zweites Ausführungsbeispiel einer erfindungsgemäßen Drehmaschine, dargestellt in Fig. 5 und 6, stellt eine vereinfachte Ausführungsform des ersten Ausführungsbeispiels dar, wobei dieselben Teile mit denselben Bezugszeichen versehen sind, so daß hinsichtlich der Beschreibung derselben vollinhaltlich auf das erste Ausführungsbeispiel Bezug genommen wird.

Im Gegensatz zum ersten Ausführungsbeispiel sind bei dem eine vereinfachte Ausführungsform darstellenden zweiten Ausführungsbeispiel die X-Schlitten 160 und 170 nicht an entsprechenden Z-Schlitten angeordnet, sondern sitzen auf einer gemeinsamen Schlittenbasis 260, die stationär am Maschinenbett 12 angeordnet und mit diesem verbunden ist.

Die Schlittenbasis 260 weist ihrerseits die Wangen 169a, b bzw. 179a, b auf, an denen die Führungswagen 168a, b bzw. 178a, b sitzen, in denen die X-Führungen 166a, b bzw. 176a, b geführt sind, die ihrerseits wiederum an den Randseiten 164a, b bzw. 174a, b der X-Schlitten 160 bzw. 170 sitzen und diese führen, wobei in gleicher Weise wie beim ersten Ausführungsbeispiel die X-Führungsebenen 167 bzw. 177 ebenfalls senkrecht zu den Spindelachsen 42 bzw. 62 stehen.

Damit bauen die X-Schlitten 160 und 170 zusammen mit der Schlittenbasis 260 in Z-Richtung ebenfalls so, daß deren Ausdehnung in Z-Richtung weniger als zwei Drittel der Ausdehnung der Spindelgehäuseträgerschlitten 30 bzw. 50 in Z-Richtung beträgt.

Bei dem zweiten Ausführungsbeispiel der erfindungsgemäßen Drehmaschine ist es für die Bearbeitung der Werkstücke W1 und W2 zwingend erforderlich, die Arbeitsspindeln 40 und 60 relativ zu den Werkzeugen 148 und 158 des dritten Werkzeugträgers 140 bzw. vierten Werkzeugträgers 150 zu bewegen, um die Werkstücke W1 und W2 Z-abhängig bearbeiten zu können.

Darüber hinaus ist es bei einem zweiten Ausführungsbeispiel außerdem erforderlich, den ersten Werkzeugträger 120 und den zweiten Werkzeugträger 130 relativ zu den Arbeitsspindeln 40 und 60 zu bewegen, so daß mit den Werkzeugen 128 bzw. 138 derselben ebenfalls eine Z-abhängige Bearbeitung der Werkstücke W1 bzw. W2 möglich ist.

Im übrigen steuert die Maschinensteuerung des zweiten Ausführungsbeispiels die X-Bewegungen der X-Schlitten 100, 110, 160 und 170 in gleicher Weise wie im Zusammenhang mit dem ersten Ausführungsbeispiel beschrieben.

## Patentansprüche

1. Werkzeugmaschine, insbesondere Drehmaschine, umfassend
ein Maschinengestell (10), auf welchem ein erster (30) und ein zweiter Spindelgehäuseträger (50) in einer Z-Richtung relativ zueinander bewegbar angeordnet sind,
eine erste, ein erstes Werkstück (W1)aufnehmende Arbeitsspindel (40), welche in einem auf dem ersten Spindelgehäuseträger (30) sitzenden Spindelgehäuse (36) um eine Spindelachse (42) drehbar gelagert ist,
eine zweite, koaxial zur ersten Arbeitsspindel (40) angeordnete und ein zweites Werkstück (W2) aufnehmende Arbeitsspindel (60), welche in einem auf dem zweiten Spindelgehäuseträger (50) sitzenden Spindelgehäuse (56) um eine Spindelachse (62) drehbar gelagert ist,
einen in X-Richtung bewegbaren ersten Werkzeugträger (120), der der ersten Arbeitsspindel (40) zur Bearbeitung des in dieser angeordneten ersten Werkstücks (W1) zugeordnet ist,
einen in X-Richtung bewegbaren zweiten Werkzeugträger (130), der der zweiten Arbeitsspindel (60) zur Bearbeitung des in dieser angeordneten zweiten Werkstücks (W2) zugeordnet ist,
wobei der erste und der zweite Werkzeugträger (120, 130) auf derselben Seite der Spindelachsen (42, 62) angeordnet sind,
und eine Maschinensteuerung (230) für die Steuerung der Relativbewegungen zwischen den ersten Werkstück (W1) und den Werkzeugen (128) des ersten Werkzeugträgers (120) sowie dem zweiten Werkstück (W2) und den Werkzeugen (138) des zweiten Werkzeugträgers (130) **dadurch gekennzeichnet, daß** zwischen den Spindelgehäuseträgern (30, 50) der ersten und der zweiten Arbeitsspindel (40, 60) auf einer dem ersten und zweiten Werkzeugträger (120, 130) ungefähr gegenüberliegenden Seite der Spindelachsen (42, 62) ein dritter mindestens in X-Richtung bewegbarer Werkzeugträger (140) vorgesehen ist, der einer der Arbeitsspindeln (40, 60) zugeordnet ist, und daß sich die Spindelgehäuseträger (30, 50) seitlich von den Spindelgehäusen (36, 56) weg erstrecken und auf derselben Seite der Spindelachsen (42, 62) wie der dritte Werkzeugträger (140) angeordnet sind.

2. Werkzeugmaschine nach Anspruch 1, **dadurch gekennzeichnet, daß** der dritte Werkzeugträger (140) auf einem X-Schlitten (160) angeordnet ist, welcher mit in einer senkrecht zu den Spindelachsen (42, 62) stehenden X-Führungsebene (167) angeordneten X-Führungen (166) an einer X-Schlittenbasis (180, 260) geführt ist.

3. Werkzeugmaschine nach Anspruch 1 oder 2, **dadurch gekennzeichnet, daß** zwischen dem ersten und dem zweiten Spindelgehäuseträger (30, 50) ein vierter Werkzeugträger (150) angeordnet ist und daß der dritte Werkzeugträger (140) der ersten Arbeitsspindel (40) und der vierte Werkzeugträger (150) der zweiten Arbeitsspindel (60) zugeordnet ist.

4. Werkzeugmaschine nach Anspruch 3, **dadurch gekennzeichnet, daß** der vierte Werkzeugträger (150) auf einem X-Schlitten (170) angeordnet ist, welcher mit in einer senkrecht zu den Spindelachsen (42, 62) stehenden X-Führungsebene (177) angeordneten X-Führungen (176) an einer X-Schlittenbasis (190, 260) geführt ist.

5. Werkzeugmaschine nach Anspruch 3 oder 4, **dadurch gekennzeichnet, daß** der dritte (140) und der vierte Werkzeugträger (150) jeweils auf einem eigenen X-Schlitten (160, 170) sitzen.

6. Werkzeugmaschine nach Anspruch 5, **dadurch gekennzeichnet, daß** der X-Schlitten (160) des dritten Werkzeugträgers (140) und der X-Schlitten (170) des vierten Werkzeugträgers (150) auf einer gemeinsamen X-Schlittenbasis (260) sitzen.

7. Werkzeugmaschine nach Anspruch 5, **dadurch gekennzeichnet, daß** jeder der X-Schlitten (160, 170) eine eigene X-Schlittenbasis (180, 190) aufweist.

8. Werkzeugmaschine nach einem der voranstehenden Ansprüche, **dadurch gekennzeichnet, daß** die X-Führungen (166, 176) in der in der X-Führungsebene (167, 177) und quer zur X-Richtung verlaufenden Querrichtung einen Abstand voneinander aufweisen, der mindestens einem wirksamen Durchmesser der Werkstückaufnahme (48, 68) in den jeweiligen Arbeitsspindeln (40, 60) entspricht.

9. Werkzeugmaschine nach einem der voranstehenden Ansprüche, **dadurch gekennzeichnet, daß** die X-Führungen (166, 176) in einer in der X-Führungsebene (167, 177) und quer zur X-Richtung verlaufenden Querrichtung einen Abstand voneinander aufweisen, der in der Größenordnung einer Ausdehnung des jeweiligen Werkzeugträgers (140, 150) in der Querrichtung liegt.

10. Werkzeugmaschine nach einem der voranstehenden Ansprüche, **dadurch gekennzeichnet, daß** der X-Schlitten (160, 170) einen Schlittenkörper aufweist, welcher nahe seiner in der Querrichtung beabstandeten Randseiten (164, 174) durch die X-Führungen (166, 176) geführt ist.

11. Werkzeugmaschine nach einem der voranstehenden Ansprüche, **dadurch gekennzeichnet, daß** der Schlittenkörper mit auf quer zur X-Führungsebene (167, 177) verlaufenden Randflächen (162, 172) sitzenden X-Führungen (166, 176) geführt ist.

12. Werkzeugmaschine nach einem der voranstehenden Ansprüche, **dadurch gekennzeichnet, daß** die X-Schlittenbasis als mit Z-Führungen (16) geführter Z-Schlitten (180, 190) ausgebildet ist.

13. Werkzeugmaschine nach Anspruch 12, **dadurch gekennzeichnet, daß** der Z-Schlitten (180, 190) mit einer Z-Führung (184, 186; 194, 196) an dem Spindelgehäuseträger (30, 50) geführt ist, dessen Arbeitsspindel (40, 60) dem auf dem Z-Schlitten (180, 190) angeordneten Werkzeugträger (140, 150) zugeordnet ist.

14. Werkzeugmaschine nach Anspruch 13, **dadurch gekennzeichnet, daß** die Z-Führung einen Arm (184, 194) aufweist, welcher sich von dem Z-Schlitten (180, 190) in Richtung des diesen führenden Spindelgehäuseträgers (30, 50) erstreckt.

15. Werkzeugmaschine nach Anspruch 14, **dadurch gekennzeichnet, daß** der Arm (184, 194) sich über den Spindelgehäuseträger (30, 50) hinaus erstreckt.

16. Werkzeugmaschine nach Anspruch 14 oder 15, **dadurch gekennzeichnet, daß** der Arm (184, 194) sich durch eine Z-Führungsaufnahme (186, 196) für diesen hindurch erstreckt, welche an dem Spindelgehäuseträger (30, 50) angeordnet ist.

17. Werkzeugmaschine nach einem der voranstehenden Ansprüche, **dadurch gekennzeichnet, daß** ein Z-Achsantrieb (200,202, 204; 210, 212, 214) vorgesehen ist, mit welchem der Z-Schlitten (180, 190) relativ zum jeweiligen Spindelgehäuseträger (30, 50) bewegbar ist.

18. Werkzeugmaschine nach Anspruch 17, **dadurch gekennzeichnet, daß** ein Z-Achsantrieb (200, 202, 204, 210, 212, 214) zwischen dem Arm (184, 194) und dem diesen führenden Spindelgehäuseträger (30, 50) wirksam ist.

19. Werkzeugmaschine nach Anspruch 18, **dadurch gekennzeichnet, daß** ein Antriebsmotor (200, 202) für den Z-Achsantrieb (200, 202, 204, 210, 212, 214) von dem Arm (184, 194) gehalten ist.

20. Werkzeugmaschine nach einem der Ansprüche 14 bis 19, **dadurch gekennzeichnet, daß** ein X-Achsantriebsmotor (206, 216) für den X-Schlitten (160, 170) an einem dem Z-Schlitten (180, 190) gegenüberliegenden Ende des Arms (184, 194) angeordnet ist.

21. Werkzeugmaschine nach Anspruch 20, **dadurch gekennzeichnet, daß** sich ein Antriebsstrang (208, 218) zwischen dem X-Achsantriebsmotor (206, 216) und dem Z-Schlitten (180, 190) entlang des Arms (184, 194) erstreckt.

22. Werkzeugmaschine nach Anspruch 21, **dadurch gekennzeichnet, daß** der Antriebsstrang (208, 218) durch den Arm (184, 194) hindurchgeführt ist.

23. Werkzeugmaschine nach einem der voranstehenden Ansprüche, **dadurch gekennzeichnet, daß** sich der Z-Schlitten (180, 190) mit mindestens einem Führungselement (182, 192) an einer am Maschinengestell (10) vorgesehenen Z-Führung (16) abstützt.

24. Werkzeugmaschine nach Anspruch 23, **dadurch gekennzeichnet, daß** der Z-Schlitten (180 190) mit einem Führungselement (182, 192) jeweils an einem von zwei am Maschinengestell (10) angeordneten Z-Führungen (16) geführt ist.

25. Werkzeugmaschine nach Anspruch 23 oder 24, **dadurch gekennzeichnet, daß** mindestens eines der Führungselemente (182, 192) an der entsprechenden Z-Führung (16) mit einer Führungslänge in Z-Richtung geführt ist die geringer als eine Kippmomente des Z-Schlittens (180, 190) aufnehmende Führungslänge ist.

26. Werkzeugmaschine nach einem der Ansprüche 23 bis 25, **dadurch gekennzeichnet, daß** mindestens eines der Führungselemente (182, 192) an der entsprechenden Z-Führung (16) so geführt ist, daß diese lediglich in quer zur Z-Richtung verlaufenden Ebenen liegende Kräfte aufnehmen.

27. Werkzeugmaschine nach einem der Ansprüche 12 bis 26, **dadurch gekennzeichnet, daß** die am Maschinengestell (10) angeordneten Z-Führungen (16) auch als Z-Führungen eines weiteren am Maschinengestell (10) geführten Schlittens (30, 50) ausgebildet sind.

28. Werkzeugmaschine nach einem der voranstehenden Ansprüche, **dadurch gekennzeichnet, daß** mindestens einer der Spindelgehäuseträger einen in Z-Richtung verfahrbaren Spindelgehäuseträgerschlitten (30, 50) für die von diesem getragene Arbeitsspindel (40, 60) bildet.

29. Werkzeugmaschine nach Anspruch 28, **dadurch gekennzeichnet, daß** beide Spindelgehäuseträger als in Z-Richtung verfahrbare Spindelgehäuseträgerschlitten (30, 50) ausgebildet sind.

30. Werkzeugmaschine nach Anspruch 28 oder 29, **dadurch gekennzeichnet, daß** eine Z-Führungsebene (20), in welcher die Z-Führungen (16) für den Spindelgehäuseträgerschlitten (30, 50) liegen, quer zu einer Aufstellfläche (22) des Maschinengestells (10) verläuft.

31. Werkzeugmaschine nach einem der Ansprüche 28 bis 30, **dadurch gekennzeichnet, daß** der Z-Schlitten (180, 190) mindestens an einer der beiden im Abstand voneinander angeordneten Z-Führungen (16) für den jeweiligen Spindelgehäuseträgerschlitten (30, 50) geführt ist.

32. Werkzeugmaschine nach Anspruch 31, **dadurch gekennzeichnet, daß** der Z-Schlitten (180, 190) an beiden im Abstand voneinander angeordneten Z-Führungen (16) für den jeweiligen Spindelgehäuseträgerschlitten (30, 50) geführt ist.

33. Werkzeugmaschine nach einem der voranstehenden Ansprüche **dadurch gekennzeichnet, daß** mit der Maschinensteuerung (230) in einem Bearbeitungsmodus der dritte Werkzeugträger (140) relativ zur ersten Arbeitsspindel (40) und der vierte Werkzeugträger (150) relativ zur zweiten Arbeitsspindel (60) in die für die Bearbeitung des ersten (W1) bzw. zweiten Werkstücks (W2) erforderlichen Z-Positionen verfahrbar sind.

34. Werkzeugmaschine nach Anspruch 33, **dadurch gekennzeichnet, daß** mit der Maschinensteuerung (230) in dem Bearbeitungsmodus der erste Werkzeugträger (120) und die erste Arbeitsspindel (40) in die für die Bearbeitung des ersten Werkstücks (W1) erforderlichen Z-Positionen relativ zueinander verfahrbar sind.

35. Werkzeugmaschine nach Anspruch 33 oder 34, **dadurch gekennzeichnet, daß** mit der Maschinensteuerung (230) in dem Bearbeitungsmodus der zweite Werkzeugträger (130) und die zweite Arbeitsspindel (60) in die für die Bearbeitung am zweiten Werkstück (W2) erforderlichen Z-Positionen relativ zueinander verfahrbar sind.

36. Werkzeugmaschine nach einem der Ansprüche 1 bis 32, **dadurch gekennzeichnet, daß** der dritte Werkzeugträger (140) mindestens an einem der Werkstücke (W1, W2) einsetzbare Werkzeuge (148) trägt, daß mit der Maschinensteuerung (230) in einem Bearbeitungsmodus eine der Arbeitsspindeln (40) relativ zum dritten Werkzeugträger (140) entsprechend der für die Bearbeitung des jeweiligen Werkstücks (W1) mittels des am dritten Werkzeugträger (140) für dieses Werkstück (W1) vorgesehenen Werkzeugs (148) erforderlichen Z-Positionen bewegbar ist und außerdem der dieser Arbeitsspindel (40) ebenfalls zugeordnete Werkzeugträger (120) relativ zu dieser Arbeitsspindel (40) entsprechend der für die Bearbeitung dieses Werkstücks (W1) mittels eines an diesem der Arbeitsspindel (40) ebenfalls zugeordneten Werkzeugträger (120) vorgesehenen Werkzeugs (128) erforderlichen Z-Positionen bewegbar ist.

37. Werkzeugmaschine nach einem der Ansprüche 1 bis 32, **dadurch gekennzeichnet, daß** mit der Maschinensteuerung (230) in dem Bearbeitungsmodus die erste Arbeitsspindel (40) relativ zum dritten Werkzeugträger (140) und die zweite Arbeitsspindel (60) relativ zum vierten Werkzeugträger (150) in die für die Bearbeitung des ersten (W1) bzw. zweiten Werkstücks (W2) erforderlichen Z-Positionen bewegbar sind.

38. Werkzeugmaschine nach Anspruch 36 oder 37, **dadurch gekennzeichnet, daß** der erste Werkzeugträger (120) relativ zur ersten Arbeitsspindel (40) und der zweite Werkzeugträger (150) relativ zur zweiten Arbeitsspindel (60) in die für die für die Bearbeitung erforderlichen Z-Positionen bewegbar sind.

## Claims

1. Machine tool, especially a lathe, comprising
a machine frame (10) upon which a first spindle housing carrier (30) and a second spindle housing carrier (50) are disposed in such a way that they can be moved in a Z direction in relation to each other,
a first working spindle (40), which receives a first workpiece (W1) and is mounted rotatably about a spindle axis (42) in a spindle housing (36) seated on the first spindle housing carrier (30),
a second working spindle (60), which is disposed coaxially with respect to the first working spindle (40), receives a second workpiece (W2) and is mounted rotatably about a spindle axis (62) in a spindle housing (56) seated on the second spindle housing carrier (50),
a first tool carrier (120), which is movable in an X direction and is associated with the first working spindle (40) for the machining of the first workpiece (W1), disposed in the latter,
a second tool carrier (130), which is movable in an X direction and is associated with the second working spindle (60) for the machining of the second workpiece (W2), disposed in the latter,
the first and second tool carriers (120, 130) being disposed on the same side of the spindle axis (42, 62),
and a machine control unit (230) for controlling the relative movements between the first workpiece (W1) and the tools (128) of the first tool carrier (120) and the second workpiece (W2) and the tools (138) of the second tool carrier (130), **characterized in that** a third tool carrier (140), which can be moved at least in an X direction and is associated with one of the working spindles (40, 60), is provided between the spindle housing carriers (30, 50) of the first and second working spindles (40, 60) on a side of the spindle axes (42, 62) which is approximately opposite from the first and second tool carriers (120, 130), and **in that** the spindle housing carriers (30, 50) extend laterally away from the spindle housings (36, 56) and are disposed on the same side of the spindle axes (42, 62) as the third tool carrier (140).

2. Machine tool according to Claim 1, **characterized in that** the third tool carrier (140) is disposed on an X slide (160), which is guided on an X slide base (180, 260) by X guides (166) disposed in an X guiding plane (167) perpendicular to the spindle axes (42, 62).

3. Machine tool according to Claim 1 or 2, **characterized in that** a fourth tool carrier (150) is disposed between the first and second spindle housing carriers (30, 50) and **in that** the third tool carrier (140) is associated with the first working spindle (40) and the fourth tool carrier (150) is associated with the second working spindle (60).

4. Machine tool according to Claim 3, **characterized in that** the fourth tool carrier (150) is disposed on an X slide (170) which is guided on an X slide base (190, 260) by X guides (176) disposed in the X guiding plane (177) perpendicular to the spindle axes (42, 62).

5. Machine tool according to Claim 3 or 4, **characterized in that** the third tool carrier (140) and the fourth tool carrier (150) are respectively seated on an X slide (160, 170) of their own.

6. Machine tool according to Claim 5, **characterized in that** the X slide (160) of the third tool carrier (140) and the X slide (170) of the fourth tool carrier (150) are seated on a common X slide base (260).

7. Machine tool according to Claim 5, **characterized in that** each of the X slides (160, 170) has an X slide base (180, 190) of its own.

8. Machine tool according to one of the preceding claims, **characterized in that** the X guides (166, 176) have in the transverse direction running in the X guiding plane (167, 177) and transversely to the X direction a spacing from each other which corresponds at least to an effective diameter of the workpiece receptacle (48, 68) in the respective working spindles (40, 60).

9. Machine tool according to one of the preceding claims, **characterized in that** the X guides (166, 176) have in a transverse direction running in the X guiding plane (167, 177) and transversely to the X direction a spacing from each other which is of the order of magnitude of an extent of the respective tool carrier (140, 150) in the transverse direction.

10. Machine tool according to one of the preceding claims, **characterized in that** the X slide (160, 170) has a slide body which is guided by the X guides (166, 176) close to its edge sides (164, 174) that are spaced apart in the transverse direction.

11. Machine tool according to one of the preceding claims, **characterized in that** the slide body is guided by X guides (166, 176) seated on edge surfaces (162, 172) running transversely to the X guiding plane (167, 177).

12. Machine tool according to one of the preceding claims, **characterized in that** the X slide base is formed as a Z slide (180, 190) guided by Z guides (16).

13. Machine tool according to Claim 12, **characterized in that** the Z slide (180, 190) is guided by a Z guide (184, 186; 194, 196) on the spindle housing carrier (30, 50), the working spindle (40, 60) of which is associated with the tool carrier (140, 150) disposed on the Z slide (180, 190).

14. Machine tool according to Claim 13, **characterized in that** the Z guide has an arm (184, 194) which extends from the Z slide (180, 190) in the direction of the spindle housing carrier (30, 50) guiding the latter.

15. Machine tool according to Claim 14, **characterized in that** the arm (184, 194) extends beyond the spindle housing carrier (30, 50).

16. Machine tool according to Claim 14 or 15, **characterized in that** the arm (184, 194) extends through a Z guiding receptacle (186, 196) for said arm which is disposed on the spindle housing carrier (30, 50).

17. Machine tool according to one of the preceding claims, **characterized in that** a Z axial drive (200, 202, 204; 210, 212, 214) is provided, with which the Z slide (180, 190) can be moved in relation to the respective spindle housing carrier (30, 50).

18. Machine tool according to Claim 17, **characterized in that** a Z axial drive (200, 202, 204; 210, 212, 214) is effective between the arm (184, 194) and the spindle housing carrier (30, 50) guiding the latter.

19. Machine tool according to Claim 18, **characterized in that** a drive motor (200, 202) for the Z axial drive (200, 202, 204; 210, 212, 214) is held by the arm (184, 194).

20. Machine tool according to one of Claims 14 to 19, **characterized in that** an X axial drive motor (206, 216) for the X slide (160, 170) is disposed at an end of the arm (184, 194) opposite from the Z slide (180, 190).

21. Machine tool according to Claim 20, **characterized in that** a drive train (208, 218) extends along the arm (184, 194) between the X axial drive motor (206, 216) and the Z slide (180, 190).

22. Machine tool according to Claim 21, **characterized in that** the drive train (208, 218) is led through the arm (184, 194).

23. Machine tool according to one of the preceding claims, **characterized in that** the Z slide (180, 190) is supported by at least one guiding element (182, 192) on a Z guide (16) provided on the machine frame (10).

24. Machine tool according to Claim 23, **characterized in that** the Z slide (180, 190) is guided by a guiding element (182, 192) respectively on one of two Z guides (16) disposed on the machine frame (10).

25. Machine tool according to Claim 23 or 24, **characterized in that** at least one of the guiding elements (182, 192) is guided on the corresponding Z guide (16) with a guiding length in the Z direction which is less than a guiding length accepting tilting moments of the Z slide (180, 190).

26. Machine tool according to one of Claims 23 to 25, **characterized in that** at least one of the guiding elements (182, 192) is guided on the corresponding Z guide (16) in such a way that the latter only accept forces lying in planes running transversely to the Z direction.

27. Machine tool according to one of Claims 12 to 26, **characterized in that** the Z guides (16) disposed on the machine frame (10) are also formed as Z guides of a further slide (30, 50) guided on the machine frame (10).

28. Machine tool according to one of the preceding claims, **characterized in that** at least one of the spindle housing carriers forms a spindle housing carrier slide (30, 50) which can be made to move in the Z direction for the working spindle (40, 60) carried by said slide.

29. Machine tool according to Claim 28, **characterized in that** both spindle housing carriers are formed as spindle housing carrier slides (30, 50) which can be made to move in the Z direction.

30. Machine tool according to Claim 28 or 29, **characterized in that** a Z guiding plane (20), in which the Z guides (16) for the spindle housing carrier slide (30, 50) lie, runs transversely to a setting-up area (22) of the machine frame (10).

31. Machine tool according to one of Claims 28 to 30, **characterized in that** the Z slide (180, 190) is guided at least on one of the two spaced-apart Z guides (16) for the respective spindle housing carrier slide (30, 50).

32. Machine tool according to Claim 31, **characterized in that** the Z slide (180, 190) is guided on both spaced-apart Z guides (16) for the respective spindle housing carrier slide (30, 50).

33. Machine tool according to one of the preceding claims, **characterized in that**, with the machine control unit (230) in a machining mode, the third tool carrier (140) can be made to move in relation to the first working spindle (40) and the fourth tool carrier (150) can be made to move in relation to the second working spindle (60) into the Z positions required for the machining of the first workpiece (W1) and second workpiece (W2), respectively.

34. Machine tool according to Claim 33, **characterized in that**, with the machine control unit (230) in the machining mode, the first tool carrier (120) and the first working spindle (40) can be made to move in relation to each other into the Z positions required for the machining of the first workpiece (W1).

35. Machine tool according to Claim 33 or 34, **characterized in that**, with the machine control unit (230) in the machining mode, the second tool carrier (130) and the second working spindle (60) can be made to move in relation to each other into the Z positions required for the machining on the second workpiece (W2).

36. Machine tool according to one of Claims 1 to 32, **characterized in that** the third tool carrier (140) carries tools (148) which can be used at least on one of the workpieces (W1, W2), **in that**, with the machine control unit (230) in a machining mode, one of the working spindles (40) is movable in relation to the third tool carrier (140) in a way corresponding to the Z positions required for the machining of the respective workpiece (W1) by means of the tool (148) provided on the third tool carrier (140) for this workpiece (W1), and what is more the tool carrier (120) likewise associated with this working spindle (40) is movable in relation to this working spindle (40) in a way corresponding to the Z positions required for the machining of this workpiece (W1) by means of a tool (128) provided on this tool carrier (120), likewise associated with the working spindle (40).

37. Machine tool according to one of Claims 1 to 32, **characterized in that**, with the machine control unit (230) in the machining mode, the first working spindle (40) is movable in relation to the third tool carrier (140) and the second working spindle (60) is movable in relation to the fourth tool carrier (150) into the Z positions required for the machining of the first workpiece (W1) and second workpiece (W2), respectively.

38. Machine tool according to Claim 36 or 37, **characterized in that** the first tool carrier (120) is movable in relation to the first working spindle (40) and the second tool carrier (150) is movable in relation to the second working spindle (60) into the Z positions required for the machining.

## Revendications

1. Machine-outil, en particulier tour, comprenant :
- un bâti de machine (10) sur lequel sont disposés un premier (30) et un second (50) supports de carter de broche pouvant être mobiles l'un par rapport à l'autre dans une direction Z,
- une première broche de travail (40) logeant une première pièce à usiner (W1), laquelle broche de travail est montée en rotation autour d'un axe de broche (42), sur le carter de broche (36) fixé sur le premier support de carter de broche (30),
- une seconde broche de travail (60) disposée de façon coaxiale par rapport à la première broche de travail (40) et logeant une seconde pièce à usiner (W2), laquelle broche de travail est montée en rotation autour d'un axe de broche (62), dans un carter de broche (56) fixé sur le second support de carter de broche (50),
- un premier porte-outil (120) mobile dans une direction X, lequel porte-outil est associé à la première broche de travail (40) pour l'usinage de la première pièce à usiner (W1) disposée dans cette broche de travail,
- un deuxième porte-outil (130) mobile dans une direction X, lequel porte-outil est associé à la seconde broche de travail (60) pour l'usinage de la seconde pièce à usiner (W2) disposée dans cette broche de travail,
où les premier et deuxième porte-outils (120, 130) sont disposés du même côté des axes de broche (42, 62),
- et une commande de machine (230) pour la commande des mouvements relatifs se produisant entre la première pièce à usiner (W1) et les outils (128) du premier porte-outil (120), ainsi qu'entre la seconde pièce à usiner (W2) et les outils (138) du deuxième porte-outil (130),
**caractérisée**
- **en ce que**, entre les supports de carter de broche (30, 50) des première et seconde broches de travail (40, 60), sur un côté des axes de broche (42, 62) placé à peu près à l'opposé des premier et deuxième porte-outils (120, 130), il est prévu un troisième porte-outil (140) au moins mobile dans la direction X, lequel porte-outil est associé à l'une des broches de travail (40, 60), et
- **en ce que** les supports de carter de broche (30, 50) s'étendent latéralement en s'éloignant des carters de broche (36, 56) et sont disposés du même côté des axes de broche (42, 62) que le troisième porte-outil (140).

2. Machine-outil selon la revendication 1, **caractérisée en ce que** le troisième porte-outil (140) est disposé sur un coulisseau X (160) qui est guidé sur une base de coulisseau X (180, 260), par des guidages X (166) disposés dans un plan de guidage vertical X (167), perpendiculairement aux axes de broche (42, 62).

3. Machine-outil selon la revendication 1 ou 2, **caractérisée en ce qu'**un quatrième porte-outil (150) est disposé entre les premier et second supports de carter de broche (30, 50), et **en ce que** le troisième porte-outil (140) est associé à la première broche de travail (40) et le quatrième porte-outil (150) à la seconde broche de travail (60).

4. Machine-outil selon la revendication 3, **caractérisée en ce que** le quatrième porte-outil (150) est disposé sur un coulisseau X (170) qui est guidé sur une base de coulisseau X (190, 260), par des guidages X (176) disposés dans un plan de guidage vertical X (177), perpendiculairement aux axes de broches (42, 62).

5. Machine-outil selon la revendication 3 ou 4, **caractérisé en ce que** les troisième (140) et quatrième (150) porte-outils sont montés, respectivement, sur un coulisseau propre X (160, 170).

6. Machine-outil selon la revendication 5, **caractérisée en ce que** le coulisseau X (160) du troisième porte-outil (140) et le coulisseau X (170) du quatrième porte-outil (150) sont fixés sur une base de coulisseau commune X (260).

7. Machine-outil selon la revendication 5, **caractérisée en ce que** chacun des coulisseaux X (160, 170) présente une base de coulisseau propre X (180, 190).

8. Machine-outil selon l'une quelconque des revendications précédentes, **caractérisée en ce que** les guidages X (166, 176), dans la direction transversale s'étendant dans le plan de guidage X (167, 177) et de façon transversale par rapport à la direction X, présentent un intervalle l'un par rapport à l'autre qui correspond au moins à un diamètre réel du logement de la pièce à usiner (48, 68) dans les broches de travail respectives (40, 60).

9. Machine-outil selon l'une quelconque des revendications précédentes, **caractérisée en ce que** les guidages X (166, 176), dans une direction transversale s'étendant dans le plan de guidage X (167, 177) et de façon transversale par rapport à la direction X, présentent un intervalle l'un par rapport à l'autre qui se situe dans l'ordre de grandeur d'une étendue du porte-outil respectif (140, 150) dans la direction transversale.

10. Machine-outil selon l'une quelconque des revendications précédentes, **caractérisé en ce que** le coulisseau X (160, 170) présente un corps de coulisseau qui, à proximité de ses côtés d'extrémités (164, 174) espacés dans la direction transversale, est guidé par les guidages X (166, 176).

11. Machine-outil selon l'une quelconque des revendications précédentes, **caractérisée en ce que** le corps du coulisseau est guidé par des guidages X (166, 176) fixés sur des surfaces d'extrémités (162, 172) s'étendant de façon transversale par rapport au plan de guidage X (167, 177).

12. Machine-outil selon l'une quelconque des revendications précédentes, **caractérisée en ce que** la base de coulisseau X est configurée comme un coulisseau Z (180, 190) guidé par des guidages Z (16).

13. Machine-outil selon la revendication 12, **caractérisée en ce que** le coulisseau Z (180, 190) est guidé par un guidage Z (184, 186 ; 194, 196), sur le support de carter de broche (30, 50) dont la broche de travail (40, 60) est associée au porte-outil (140, 150) disposé sur le coulisseau Z (180, 190).

14. Machine-outil selon la revendication 13, **caractérisée en ce que** le guidage Z présente un bras (184, 194) qui s'étend depuis le coulisseau Z (180, 190), en direction du support de carter de broche (30, 50) guidant ce coulisseau.

15. Machine-outil selon la revendication 14, **caractérisée en ce que** le bras (184, 194) s'étend au-delà du support de carter de broche (30, 50).

16. Machine-outil selon la revendication 14 ou 15, **caractérisée en ce que** le bras (184, 194) s'étend à travers un logement de guidage Z (186, 196), prévu à travers ce bras, qui est disposé sur le support de carter de broche (30, 50).

17. Machine-outil selon l'une quelconque des revendications précédentes, **caractérisée en ce qu'**il est prévu un entraînement d'axe Z (200, 202, 204 ; 210, 212, 214) grâce auquel le coulisseau Z (180, 190) est mobile par rapport au support de carter de broche respectif (30, 50).

18. Machine-outil selon la revendication 17, **caractérisée en ce qu'**un entraînement d'axe Z (200, 202, 204, 210, 212, 214) est actif entre le bras (184, 194) et le support de carter de broche (30, 50) guidant ce bras.

19. Machine-outil selon la revendication 18, **caractérisée en ce qu'**un moteur d'entraînement (200, 202) prévu pour l'entraînement d'axe Z (200, 202, 204, 210, 212, 214), est maintenu par le bras (184, 194).

20. Machine-outil selon l'une quelconque des revendications 14 à 19, **caractérisée en ce qu'**un moteur d'entraînement d'axe X (206, 216), prévu pour le coulisseau X (160, 170), est disposé sur une extrémité du bras (184, 194) placée à l'opposé du coulisseau Z (180, 190).

21. Machine-outil selon la revendication 20, **caractérisée en ce qu'**une chaîne cinématique (208, 218) s'étend entre le moteur d'entraînement d'axe X (206, 216) et le coulisseau Z (180, 190), le long du bras (184, 194).

22. Machine-outil selon la revendication 21, **caractérisée en ce que** la chaîne cinématique (208, 218) est guidée transversalement par le bras (184, 194).

23. Machine-outil selon l'une quelconque des revendications précédentes, **caractérisée en ce que** le coulisseau Z (180, 190) s'appuie, par au moins un élément de guidage (182, 192), sur un guidage Z (16) prévu sur le bâti de machine (10).

24. Machine-outil selon la revendication 23, **caractérisée en ce que** le coulisseau Z (180, 190) est guidé par un élément de guidage (182, 192), respectivement sur l'un des deux guidages Z (16) disposés sur le bâti de machine (10).

25. Machine-outil selon la revendication 23 ou 24, **caractérisée en ce que** au moins l'un des éléments de guidage (182, 192) est guidé sur le guidage Z (16) correspondant, en ayant une longueur de guidage dans la direction Z qui est plus petite qu'une longueur de guidage absorbant des couples de renversement du coulisseau Z (180, 190).

26. Machine-outil selon l'une quelconque des revendications 23 à 25, **caractérisée en ce qu'**au moins l'un des éléments de guidage (182, 192) est guidé sur le guidage Z (16) correspondant, de manière telle que cet élément de guidage absorbe seulement des forces se trouvant dans des plans s'étendant de façon transversale par rapport à la direction Z.

27. Machine-outil selon l'une quelconque des revendications 12 à 26, **caractérisée en ce que** les guidages Z (16) disposés sur le bâti de machine (10) sont configurés également comme des guidages Z d'un autre coulisseau (30, 50) guidé sur le bâti de machine (10).

28. Machine-outil selon l'une quelconque des revendications précédentes, **caractérisée en ce qu'**au moins l'un des supports de carter de broche forme un coulisseau de support de carter de broche (30, 50) mobile dans la direction Z, pour la broche de travail (40, 60) supportée par ce coulisseau.

29. Machine-outil selon la revendication 28, **caractérisée en ce que** les deux supports de carter de broche sont configurés comme des coulisseaux de supports de carter de broche (30, 50) mobiles dans la direction Z.

30. Machine-outil selon la revendication 28 ou 29, **caractérisée en ce qu'**un plan de guidage Z (20), dans lequel se trouvent les guidages Z (16) pour le coulisseau de support de carter de broche (30, 50), s'étend de façon transversale par rapport à une surface de montage (22) du bâti de machine (10).

31. Machine-outil selon l'une quelconque des revendications 28 à 30, **caractérisée en ce que** le coulisseau Z (180, 190) est guidé au moins sur l'un des deux guidages Z (16) disposés en étant espacés l'un de l'autre et prévus pour le coulisseau de support de carter de broche respectif (30, 50).

32. Machine-outil selon la revendication 31, **caractérisée en ce que** le coulisseau Z (180, 190) est guidé sur les deux guidages Z (16) disposés en étant espacés l'un de l'autre et prévus pour le coulisseau de support de carter de broche respectif (30, 50).

33. Machine-outil selon l'une quelconque des revendications précédentes, **caractérisée en ce que**, avec la commande de machine (230) fonctionnant en mode usinage, le troisième porte-outil (140) est mobile par rapport à la première broche de travail (40) et le quatrième porte-outil (150) par rapport à la seconde broche de travail (60), dans les positions Z nécessaires pour l'usinage de la première pièce (W1) et de la seconde pièce (W2) à usiner.

34. Machine-outil selon la revendication 33, **caractérisée en ce que**, avec la commande de machine (230) fonctionnant en mode usinage, le premier porte-outil (120) et la première broche de travail (40), dans les positions Z nécessaires pour l'usinage de la première pièce à usiner (W1), sont mobiles l'un par rapport à l'autre.

35. Machine-outil selon la revendication 33 ou 34, **caractérisée en ce que**, avec la commande de machine (230) fonctionnant en mode usinage, le deuxième porte-outil (130) et la seconde broche de travail (60), dans les positions Z nécessaires pour l'usinage sur la seconde pièce à usiner (W2), sont mobiles l'un par rapport à l'autre.

36. Machine-outil selon l'une quelconque des revendications 1 à 32, **caractérisée en ce que** le troisième porte-outil (140) supporte des outils (148) utilisables au moins sur l'une des pièces à usiner (W1, W2), **en ce que**, avec la commande de machine (230) fonctionnant en mode usinage, l'une des broches de travail (40) est mobile par rapport au troisième porte-outil (140), de façon correspondant aux positions Z nécessaires pour l'usinage de la pièce à usiner respective (W1) au moyen de l'outil (148) prévu sur le troisième porte-outil (140) pour cette pièce à usiner (W1) et, en outre, le porte-outil (120) associé également à cette broche de travail (40) est mobile par rapport à cette broche de travail (40), de façon correspondant aux positions Z nécessaires pour l'usinage de cette pièce à usiner (W1) au moyen d'un outil (128) prévu sur le porte-outil (120) et associé également à cette broche de travail (40).

37. Machine-outil selon l'une quelconque des revendications 1 à 32, **caractérisée en ce que**, avec la commande de machine (230) fonctionnant en mode usinage, la première broche de travail (40) est mobile par rapport au troisième porte-outil (140) et la seconde broche de travail (60) par rapport au quatrième porte-outil (150), dans les positions Z nécessaires pour l'usinage de la première (W1) ou de la seconde (W2) pièce à usiner.

38. Machine-outil selon la revendication 36 ou 37, **caractérisée en ce que** le premier porte-outil (120) est mobile par rapport à la première broche de travail (40) et le deuxième porte-outil (150) par rapport à la seconde broche de travail (60), dans les positions Z nécessaires pour l'usinage des pièce à usiner.
